# EUROPEAN PATENT APPLICATION

(11) **EP 4 782 150 A1**
(43) Date of publication of application: **29.07.2026**
(21) Application number: 26153306.1
(22) Date of filing: 21.01.2026
(51) Int. Cl.: B25B 5/00, B25B 5/14, B25B 5/04, B25B 5/10, B23Q 3/06, B23K 37/0531, B25B 5/16

(54) **SYSTEM AND METHOD FOR CLAMPING A COMPONENT OF AN AIRCRAFT ENGINE UNDERGOING A MANUFACTURING PROCESS**

(30) Priority: 24.01.2025 US 202519036158
(71) Applicant: Pratt & Whitney Canada Corp., Longueuil, Québec J4G 1A1 (CA)
(72) Inventor: TOPPING, Anthony, Longueuil (CA); LACHANCE, Pierre-Luc, Brossard (CA)
(74) Representative: Dehns

(57) **Abstract**

A system (30) for use in the manufacturing of an aircraft engine (10) includes an engine component (20) to be machined. The component (20) has an opening (23) leading to an inner cavity (22) in an axial direction. The inner cavity (22) has an inner wall (25) with a tapered portion (25c) extending axially and a surface to be clamped (25d) extending radially outwardly from the opening (23) to the tapered portion (25c). The system (30) further includes a clamping device (40), for clamping the component (20), having a base (41), a shaft (42) displaceable relative to the base (41) and inserted through the opening (23), and a clamp (44) coupled to the shaft (42). The clamp (44) is movable, based on a position of the shaft (42) relative to the base (41), between an undeployed state in which the clamp (44) is free of contact with the inner wall (25) of the component (20) and a deployed state in which the clamp (44) engages the surface to be clamped (25d) to axially retain the component (20).

## Description

### TECHNICAL FIELD

The disclosure relates generally to aircraft engine machining and, more particularly, to a clamping system for use in the machining of an aircraft engine component.

### BACKGROUND

Components of aircraft engines undergo various machining steps in the engine's manufacturing process. To perform such steps, the component is often required to be clamped or retained in position, thereby assuring the precision and accuracy of the machining step. Aircraft engine components often include specific geometries tied to their functionality. These geometries may pose challenges when trying to clamp or secure the components in place, for instance due to the surfaces to be clamped being difficult to access. Improvements are thus desired.

### SUMMARY

In one aspect, there is provided a system for use in the manufacturing of an aircraft engine, the system comprising: a component of the aircraft engine to be machined, the component to be machined having an opening leading to an inner cavity in an axial direction, the inner cavity having an inner wall with a tapered portion extending axially and a surface to be clamped extending radially outwardly from the opening to the tapered portion; and a clamping device for clamping the component to be machined, the clamping device including a base, a shaft displaceable relative to the base in the axial direction and inserted through the opening of the component to be machined, and a clamp coupled to the shaft, the clamp movable, based on a position of the shaft relative to the base, between an undeployed state in which the clamp is free of contact with the inner wall of the component to be machined and a deployed state in which the clamp engages the surface to be clamped to axially retain the component to be machined.

In certain embodiments, the system as defined above includes one or more of the following features, in whole or in part, and in any combination.

In an embodiment, the system includes a carrier and an activator axially movable along the shaft, the carrier axially movable together with the shaft and pivotally carrying the clamp for engagement with the activator to move the clamp between the undeployed state and the deployed state upon axial displacement of the shaft relative to the base.

In an embodiment, the clamp includes one or more wing-shaped clamping members pivotally mounted to the carrier for pivotal movement between the undeployed state and the deployed state.

In an embodiment, the system further includes a spring mounted around the shaft axially between the base and the activator, the spring urging the activator towards the clamp.

In an embodiment, the shaft includes external threading rotatably engageable with internal threading in a bore extending through the base for displacement of the shaft along the axis.

In an embodiment, the clamping device includes a linear actuator disposed in the base and adapted to axially displace the shaft along the axis.

In an embodiment, the linear actuator is a hydraulic actuator or a pneumatic actuator.

In an embodiment, the component to be machined includes an additional opening opposite the opening, the additional opening having a diameter inferior to a diameter of the opening.

In another aspect there is provided a clamping device for clamping an aircraft component during a manufacturing process, the aircraft component having an inner cavity circumscribed by an inner wall, the clamping device comprising: a base; a shaft projecting from the base along an axis, the shaft axially displaceable relative to the base, the shaft axially insertable into the inner cavity of the aircraft component; and a clamp movable, based on an axial position of the shaft relative to the base, between an undeployed state in which the clamp is free of contact with the inner wall of the aircraft component and a deployed state in which the clamp engages the inner wall of the aircraft component to axially retain the aircraft component.

In certain embodiments, the clamping device as defined above includes one or more of the following features, in whole or in part, and in any combination.

In an embodiment, the clamping device further includes a carrier and an activator mounted to the shaft, the activator axially moveable along the shaft, the carrier axially moveable together with the shaft and pivotally carrying the clamp for engagement with the activator to move the clamp between the undeployed state and the deployed state upon axial displacement of the shaft relative to the base.

In an embodiment, the clamp includes one or more wing-shaped clamping member pivotally mounted to the carrier for pivotal movement between the undeployed state and the deployed state.

In an embodiment, the clamping device further includes a spring mounted around the shaft axially between the base and the activator, the spring urging the activator towards the clamp.

In an embodiment, the shaft includes external threading rotatably engageable with internal threading in a bore extending through the base for displacement of the shaft along the axis.

In an embodiment, the clamping device further includes a linear actuator disposed in the base and adapted to axially displace the shaft relative to the base.

In an embodiment, the linear actuator is a hydraulic actuator or a pneumatic actuator.

In a further aspect, there is provided a method for clamping a component of an aircraft engine undergoing a manufacturing process, comprising: inserting a clamping device through an opening of the component in an axial direction, the clamping device including a clamp in an undeployed state in which the clamp is free of contact from an inner wall of the component; and subsequently to the inserting the clamping device through the opening of the component, moving the clamp from the undeployed state to a deployed state in which the clamp engages an axially facing surface of the inner wall of the component to axially retain the component to the clamping device.

In certain embodiments, the method as defined above includes one or more of the following features, in whole or in part, and in any combination.

In an embodiment, moving the clamp from the undeployed state to the deployed state includes displacing a shaft of the clamping device in the axial direction, the shaft coupled to the clamp to impart motion thereto.

In an embodiment, the clamp includes a pivotally-mounted clamping member, and wherein displacing the shaft includes torquing a fastener at a distal end of the shaft to induce axial movement of the shaft relative to a base of the clamping device, said axial movement of the shaft biasing the pivotally-mounted clamping member against a spring-loaded activator to move the clamp from the undeployed state to the deployed state.

In an embodiment, displacing the shaft includes activating a linear actuator adapted to axially displace the shaft.

In an embodiment, moving the clamp from the undeployed state to the deployed state includes engaging the clamp against a clamping surface of the component, the clamping surface extending radially outwardly from the opening.

### BRIEF DESCRIPTION OF THE DRAWINGS

Reference is now made to the accompanying figures in which:
FIG. 1 is a schematic cross sectional view of a gas turbine engine;
FIG. 2 is a perspective cross sectional view of a component of the engine of FIG. 1 to be machined;
FIG. 3 is a cross sectional view of a system for machining the component of FIG. 2, according to an embodiment;
FIG. 4 is a cross-sectional view of a clamping device for the system of FIG. 3;
FIGS. 5A, 5B and 5C are perspective views of an activator, a guide, and a clamp, respectively, for the clamping device of FIG. 4;
FIGS. 6A-6B are a perspective cross sectional view and a cross sectional view, respectively, of the system of FIG. 3 in an undeployed state;
FIGS. 7A-7B are a perspective cross sectional view and a cross sectional view, respectively, of the system of FIG. 3 in an intermediate state;
FIGS. 8A-8B are a perspective cross sectional view and a cross sectional view, respectively, of the system of FIG. 3 in a deployed state;
FIG. 9 is a cross sectional view of a system for machining the component of FIG. 2, according to another embodiment; and
FIGS. 10A-10B are a perspective cross sectional view and a cross sectional view, respectively, of a system for machining the component of FIG. 2, according to yet another embodiment.

### DETAILED DESCRIPTION

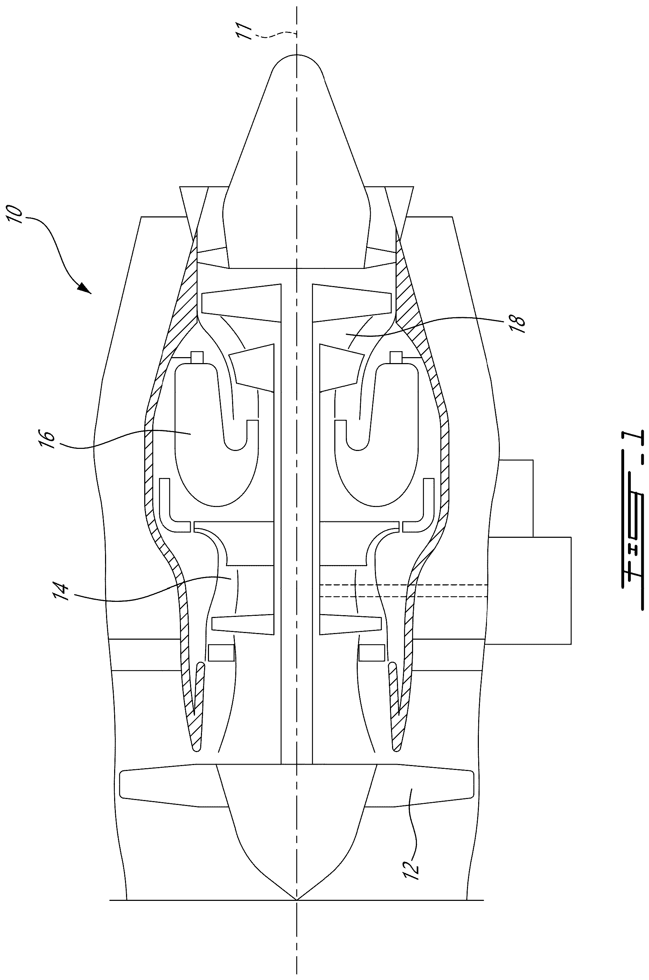

FIG. 1 illustrates a gas turbine engine 10 of a type preferably provided for use in subsonic flight and extending along a central engine axis 11. The engine 10 generally comprises in serial flow communication a fan 12 through which ambient air is propelled, a compressor section 14 for pressurizing the air, a combustor 16 in which the compressed air is mixed with fuel and ignited for generating an annular stream of hot combustion gases, and a turbine section 18 for extracting energy from the combustion gases. While engine 10 is shown as a turbofan engine, it is understood that the present disclosure relates to other aircraft engine types, as well as to auxiliary power units.

It is understood that a plurality of machining processes are carried out to machine the various components of the engine 10, during which the various components may be secured or fixed in place while a given machining step is performed.

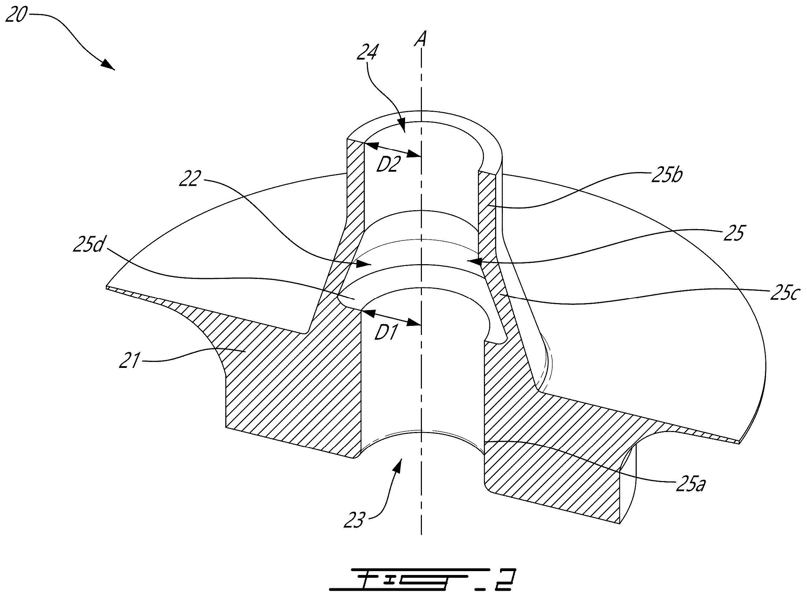

Referring additionally to FIG. 2, an exemplary engine component to be machined, illustratively an impeller, is shown at 20. In some embodiments, the impeller 20 forms part of the compressor section 14 of the engine 10. However, it is understood that other rotating components of the engine 10 having varying inner diameters, are contemplated.

In the shown case, the impeller 20 has an impeller body 21 and an inner cavity 22 within the impeller body 21. A shape of the body 21 can vary, for instance based on the nature of the engine 10. The inner cavity 22 has a first opening 23 and a second opening 24. In the shown case, the first opening 23 and the second opening 24 are opposed and aligned along an impeller axis A, although other shapes are contemplated. The inner cavity 22 is circumscribed by an inner wall 25 extending from the first opening 23 to the second opening 24. The inner wall 25 illustratively includes a first portion 25a extending into the inner cavity 22 from the first opening 23, a second portion 25b extending into the inner cavity 22 from the second opening 24, and a third portion 25c, also referred to as a tapered portion 25c, within the inner cavity 22 between the first portion 25a and the second portion 25b. The tapered portion 25c of the inner wall 25 has a tapered profile along the impeller axis A with a diameter that increases in a direction from the second opening 24 to the first opening 23. For instance, the tapered portion 25c may have a frusto-conical profile, while the first and second portions 25a, 25b may have a cylindrical profile. Other profiles for the inner wall 25 are contemplated, for instance having a cylindrical cross-sectional shape. Illustratively, a laterally-extending portion of the inner wall 25, also referred to as a surface or inner shoulder to be clamped 25d or a clamping surface, extends in a direction normal to the impeller axis A and joins the tapered portion 25c to the first portion 25a of the inner wall 25. In the shown embodiment, a diameter D1 of the first portion 25a of the inner wall 25 is greater than a diameter D2 of the second portion 25b of the inner wall 25. Stated differently, the first opening 23 has a greater diameter than the second opening 24. In other embodiments, the impeller 20 includes only a single opening 23, as discussed in further detail below.

To machine components such as impeller 20, it may be required to secure or retain the component in place. While machining the outer surface of the component, the component is to be secured by clamping the component's inner cavity to avoid interfering with the machining tool as it machines the outer surface of the component. The components thus include surfaces conducive to be clamped (e.g., surface to be clamped 25d) to facilitate the clamping and subsequent machining steps. However, components such as impeller 20 can have geometries that are not conducive to the insertion of a traditional clamping device. For instance, with reference to the impeller 20 shown in FIG. 2, traditional clamping devices such as a plug cannot simply be inserted into the second opening 24 to engage the horizontal surface to be clamped 25d, as the diameter D2 of the second opening 24 is inferior to the inner diameter D1 adjacent to the surface to be clamped 25d. In addition, the tapered profile of the tapered portion 25c poses difficulties in inserting a traditional clamp, as damage to the inner wall 25 may occur. It would understandably be undesirable for such damage to occur, for instance when the inner wall 25 has been previously machined and is in its finished state. To remedy these and other difficulties, the present disclosure provides a deployable clamping device that can be inserted into the component to be machined in a first, undeployed (i.e., compact or contracted) state to avoid interference with the inner wall 25 of the component, and expand or move into a second, deployed state in which the device engages a surface of the inner wall 25 to secure or retain the component in place while the machining process is carried out.

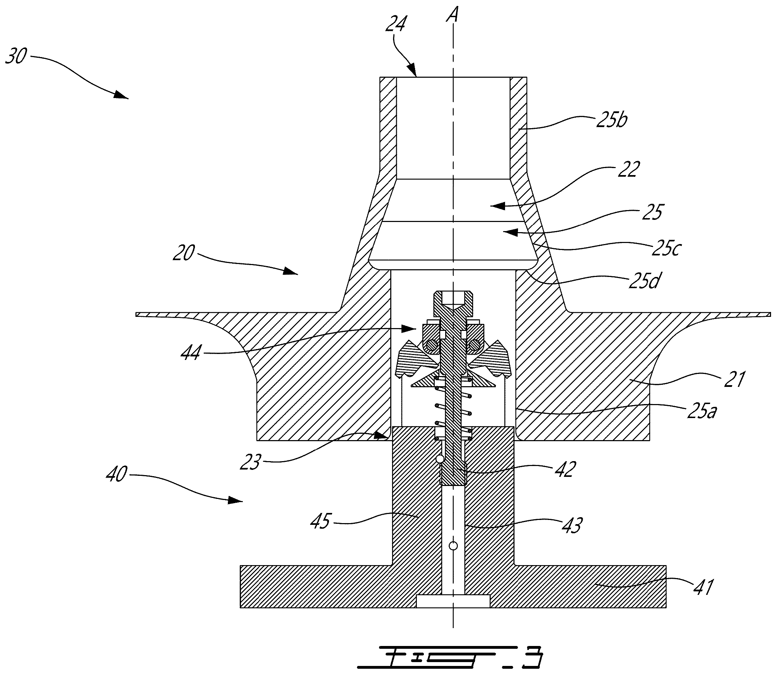

Referring now to FIG. 3, there is shown a system 30 for use in the manufacturing of an aircraft engine 10, and in particular for machining one or more components of the engine 10 (e.g., impeller 20). The depicted system 30 includes the impeller 20 to be machined and a clamping device 40 to be inserted into the impeller 20 to retain or secure the impeller 20 during a machining process thereof. As will be discussed in further detail below, the clamping device 40 is inserted through an opening (illustratively the first opening 23) leading to the inner cavity 22 of the impeller 20 in an undeployed state. The clamping device 40 is then deployed (i.e., moved into its deployed state) as the clamp 44 is lowered to engage to the shoulder or surface to be clamped 25d of the inner wall 25 of the impeller 20 and secure or retain the impeller 20 throughout the machining process. As shown, system 30 may be particularly useful in clamping any component having a central bore with diametric differences wherein a first diameter of the central bore is different from at least one second diameter therethrough.

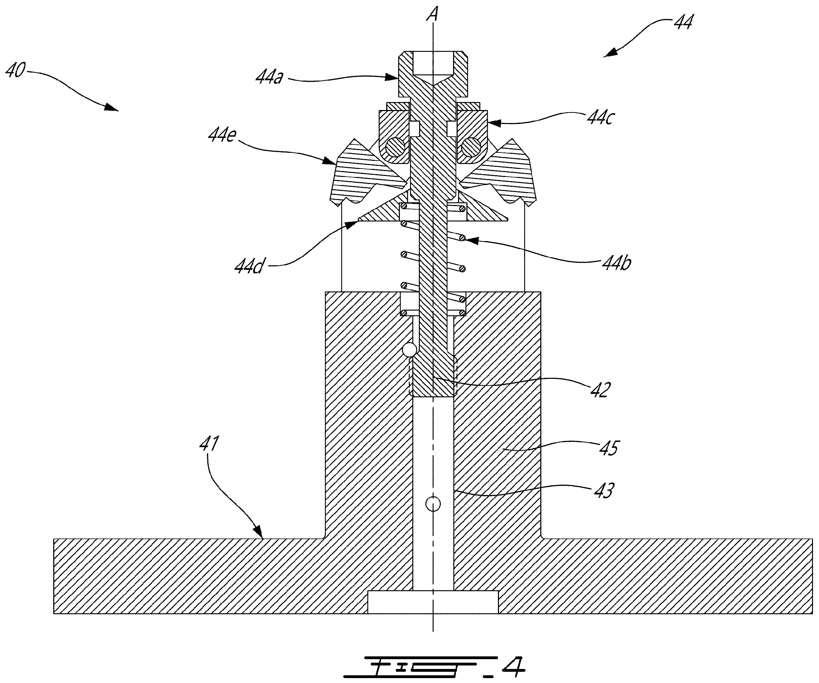

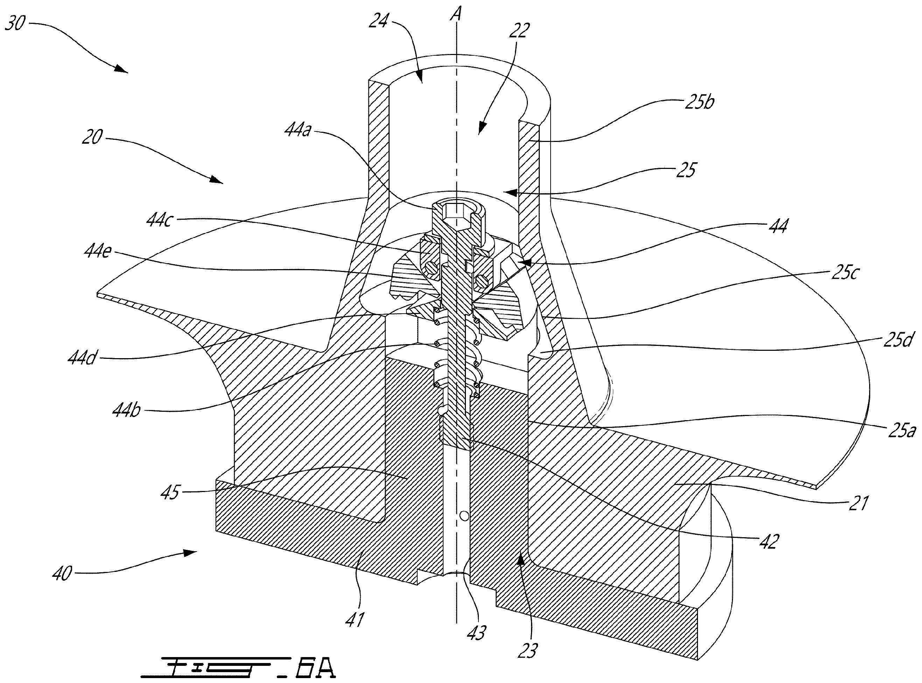

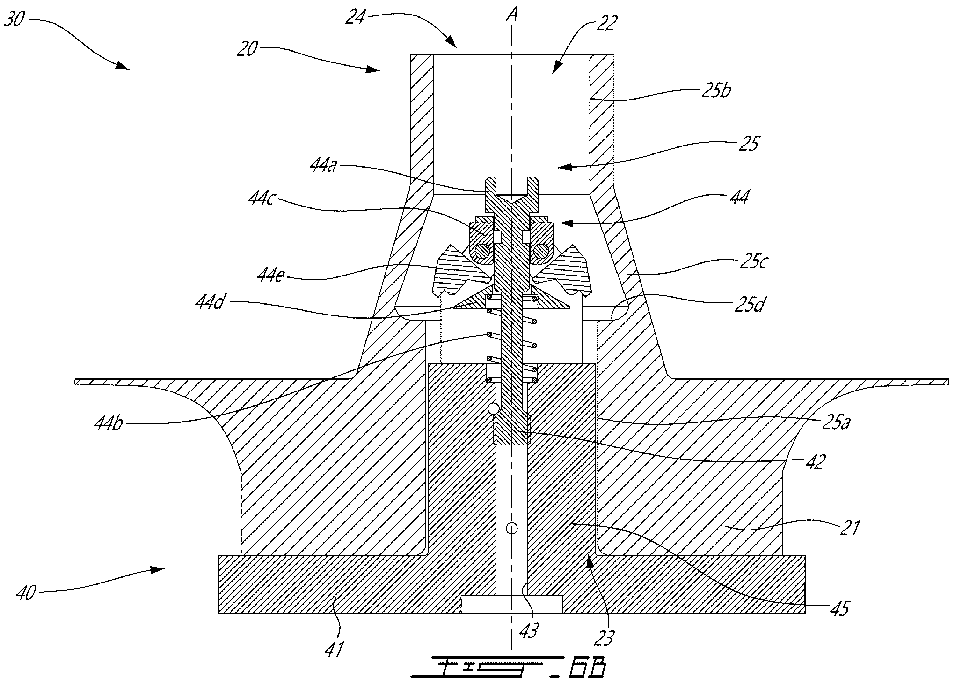

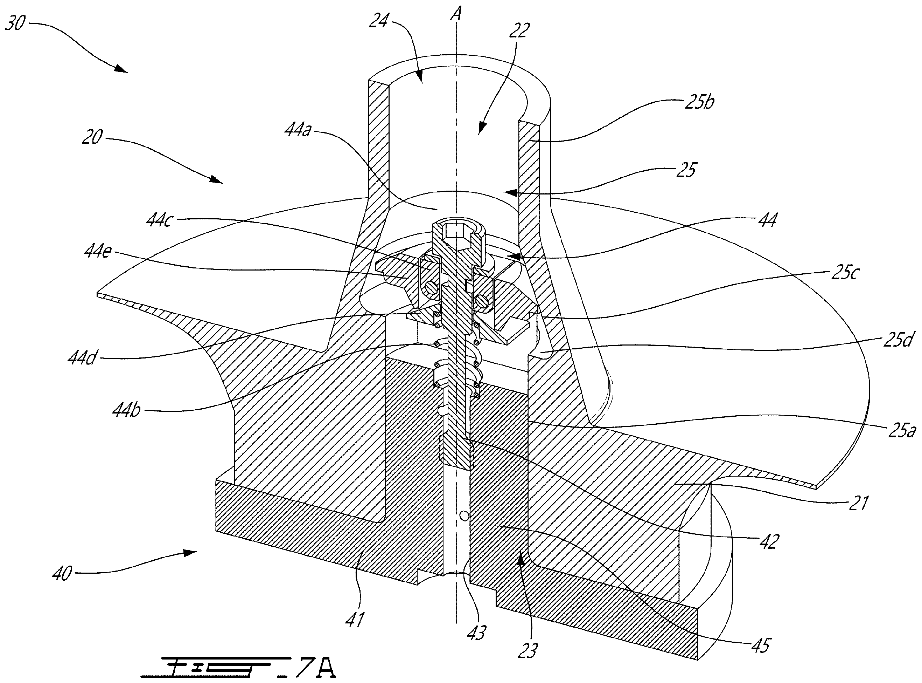

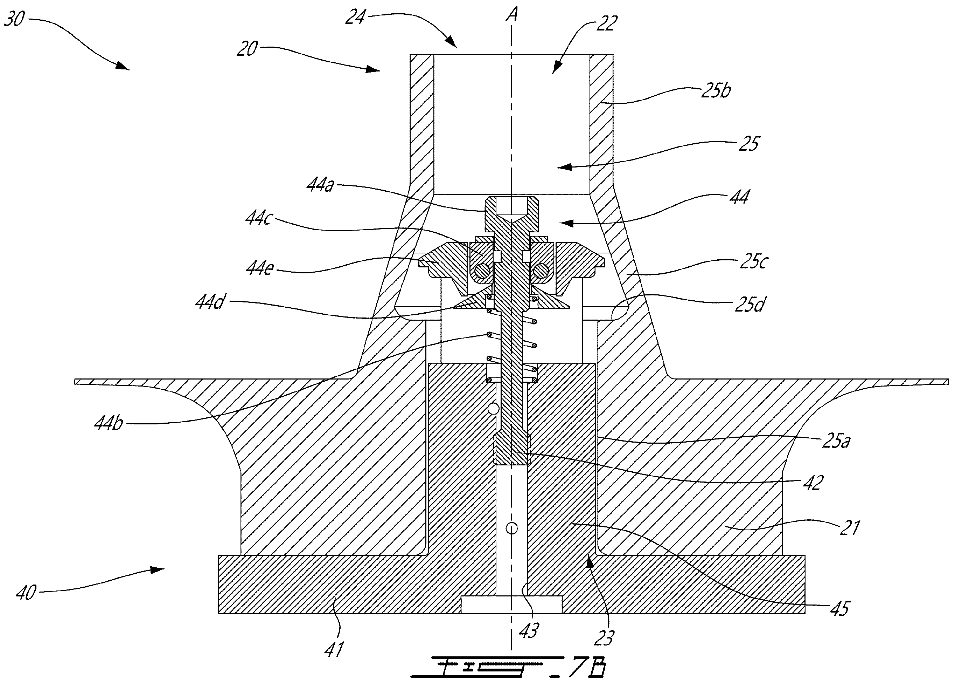

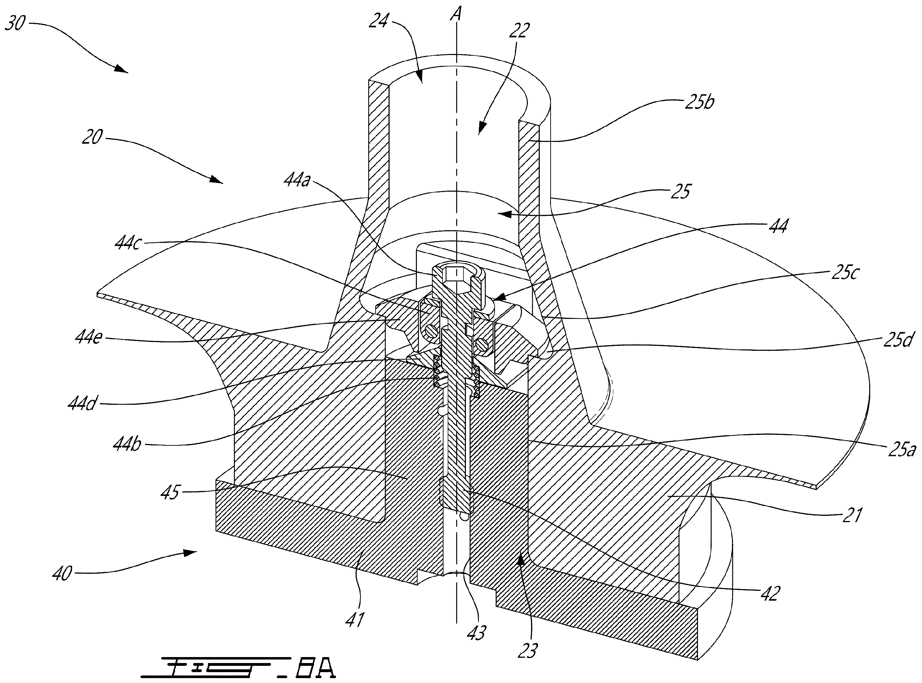

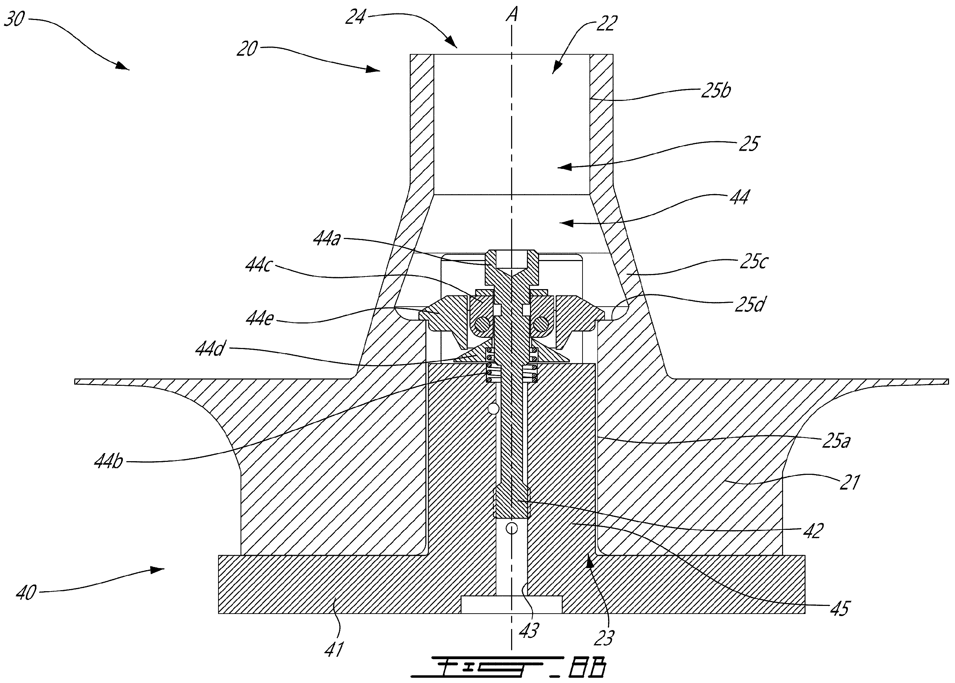

Referring now to FIGS. 4-5C, an exemplary clamping device 40 is shown for securing the impeller 20 (or other engine components to be clamped) in a machining process, in accordance with an embodiment of the present disclosure. Other embodiments of a clamping device 40 are contemplated, as discussed in further detail below. Illustratively, the clamping device 40 includes a base 41, illustratively having a flanged bottom upon which the engine component to be machined may be seated, and a shaft 42 displaceable through a bore 43 in a protruding portion 45 of the base 41. Stated differently, the shaft 42 is displaceable in and out of the base 41 in the axial direction A. In embodiments, the shaft 42 and the bore 43 include complimentary threading (i.e., external threading on the shaft 42 and internal threading in the bore 43) for converting rotation of the shaft 42 into axial displacement thereof. A clamp 44 is coupled or mounted to the shaft 42, illustratively at a distal end of the shaft 42. As will be discussed in further detail below, the clamp 44 is movable, based on a position of the shaft 42 relative to the base 41, between an undeployed state (see FIGS. 6A-6B) in which the clamp 44 is free of contact with the inner wall 25 of the impeller 20, and a deployed state (see FIGS. 8A-8B) in which the clamp 44 engages the surface to be clamped 25d to axially retain the impeller 20. An intermediate state of the clamp 40 (see FIGS. 7A-7B), i.e., between the undeployed and deployed states, is also contemplated, for instance to ensure the surfaces of the clamp 44 that are to engage the surface to be clamped 25d are oriented correctly before said engagement occurs.

Still referring to FIGS. 4-5C, in the shown case, the clamp 44 includes a fastener 44a (illustratively a center captive bolt having a socket head at the distal end of the clamp 44, although other fasteners are contemplated) at a distal end of the shaft 42, and a spring 44b surrounding the shaft 42 and for spring-loading the clamp 44. Clamp 44 may thus be referred to as a spring-loaded mechanism. It is understood that the fastener 44a and the shaft 42 can be of unitary construction and, thus, be integrated in the form of a one piece component. The clamp 44 further includes a carrier 44c mounted to the distal end of the shaft 42 underneath the head of the fastener 44a, an activator 44d also mounted to the shaft 42, and a clamping member 44e disposed axially between the carrier 44c and the activator 44d. The spring 44b urges the activator 44d upwardly against the clamping member 44e. According to the embodiment illustrated in FIG. 4, a first end of the spring 44b is seated in a seat defined at a distal end of the protruding portion 45, and a second opposed end of the spring 44b is engaged in a corresponding seat defined in the bottom surface of the activator 44d. Illustratively, the clamping member 44e may be provided in the form of two pivotable wing-shaped clamping members 44e , although other numbers and types for clamping member 44e (i.e., having a shape that engages the surface to be clamped 25d with an angled surface) are contemplated. As shown in FIG. 4, the wing-shaped clamping members 44e may be pivotally mounted to the carrier 44c on opposed sides of the axis A of the shaft 42. As will be discussed in further detail below, torquing of the fastener 44a effects axial displacement of the shaft 42 into the bore 43 of the base 41, as well as compression of the spring 44b. Such torquing may, for instance, be accomplished by inserting a suitable tool through the second opening 24. Torquing of the fastener 44a draws the carrier 44c towards the spring-loaded activator 44d, which pushes against the clamping member 44e to move the clamping member 44e from the undeployed state to the deployed state. More particularly, the activator 44d is biased by the compressed spring 44b to cause the clamping member 44e to pivot upwardly as the carrier 44c carrying the clamping member 44e is moved axially downwardly with the shaft 42 relative to the stationary base 41. Stated differently, the spring 44b allows the clamping member 44e to deploy before the lowering of the clamp 44 (i.e., in the axial direction) occurs. The clamp 44 is thus adapted to gradually deploy while axially displacing towards the surface to be clamped 25d, thereby avoiding contact with other surfaces of the inner cavity 22. The deployment height of the clamp 44 is controlled, for instance by the length of the spring 44b, which may vary based on the geometry of the component to be machined. The axially protruding portion 45 of the base 41 is configured for insertion into the inner cavity 22 of the impeller 20 adjacent the clamp 44, with the bore 43 disposed axially centrally through the protruding portion 45.

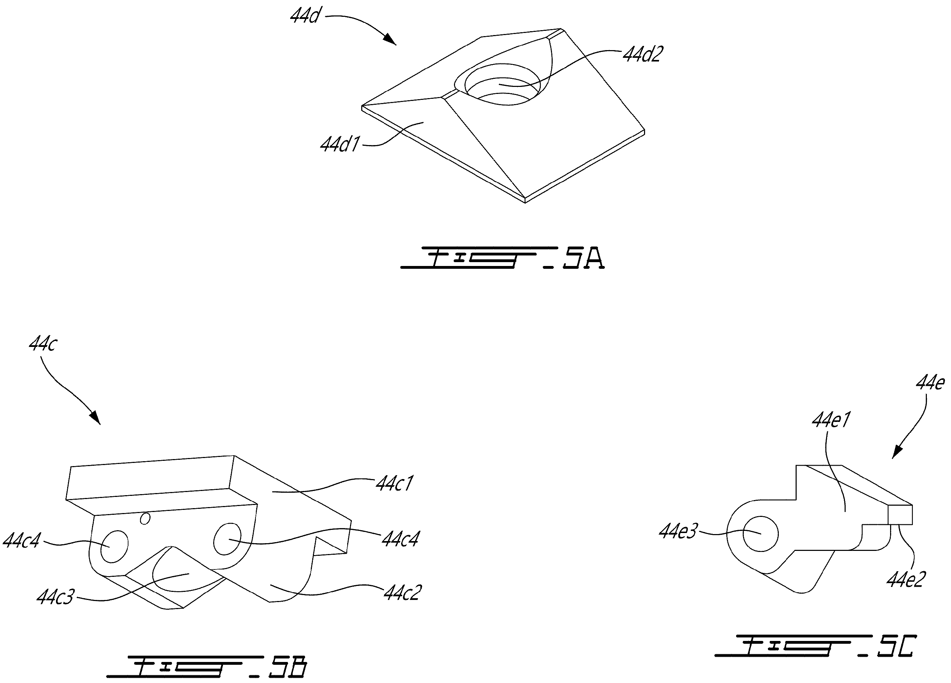

Exemplary depictions of the activator 44d, carrier 44c and clamping member 44e are shown in FIGS. 5A-5C, respectively. It is understood, however, that the specific geometries of the activator 44d, carrier 44c and clamping member 44e are not restricted to the depictions herein and can vary. The depicted activator 44d includes a body 44d1 having the shape of a triangular-based prism, although other shapes are contemplated, and an aperture 44d2 extending centrally through an apex of the body 44d1 for loosely receiving the shaft 42 therethrough. The sloping or ramp surfaces of the activator 44d are adapted for guiding the displacement of the clamping member 44e, as discussed in further detail below. The depicted carrier 44c includes a base 44c1, support members 44c2 protruding from the base 44c1 and adapted for pivotally supporting the exemplified wing-shaped clamping members 44e (as discussed in further detail below), and an aperture 44c3 disposed through the carrier 44c for receiving the shaft 42 therethrough. Holes 44c4 are defined through the support members 44c2 for pivotally mounting the clamping members 44e to the carrier 44c. The holes 44c4 are oriented at right angle to the central aperture 44c3 for allowing the clamping members 44e to pivot about an axis perpendicular to the axis A. The base is configured to uniformly axially abut an undersurface of the head of the fastener 44a or a washer disposed axially therebetween, as shown in Fig. 4. As noted above, each depicted clamping member 44e has a wing-shaped body 44e1 with an abutting surface 44e2 for engaging the surface to be clamped 25d of the impeller 20. An aperture 44e3 disposed through the body 44e1 is provided for pivotally connecting the clamping member 44e to an associated one of the support member 44c2 of the carrier 44c (e.g., via an additional fastener or pivot pin).

Referring now to FIGS. 6A-6B, the system 30 is shown with the clamp 44 in its undeployed state. In this undeployed state, the base 41 of the clamping device 40 is engaged or in abutment with the body 21 of the impeller 20, for instance secured thereto, and the protruding portion 45 is received in the first (or lower) opening 23. The clamp 44 is received within the inner cavity 22 of the impeller 20, free of contact with the inner wall 25. In particular, the clamp 44 is inserted through the first opening 23 towards the inner cavity 22 without engaging the first portion 25a, second portion 25b or third portion 25c of the inner wall 25. As such, the clamp 44 is insertable into the inner cavity 22 of the impeller 20 in a manner that avoids potentially damaging the impeller 20. In the undeployed state, the spring 44b is uncompressed and the clamping member 44e is retracted towards the shaft 42 such that the clamp 44 occupies a minimum radial span, thereby avoiding contact with the inner wall 25. In the shown embodiment in which the impeller 20 has lower and upper openings 23, 24, the clamping device 40 is inserted through the opening 23 having a greater diameter. In other cases, the opening through which the clamping device 40 is inserted may vary.

Referring now to FIGS. 7A-7B, the system 30 is shown with the clamp 44 in an intermediate state. Stated differently the clamp 44 is shown in an intermediary position between the undeployed state (see FIGS. 6A-6B) and the deployed state (see FIGS. 8A-8B). In the shown case, to move from the undeployed state to the intermediate state, the fastener 44a is torqued, thereby causing the shaft 42 to displace axially further into the bore 43 and in a direction towards the base 41, thereby compressing the spring 44b and beginning to pivotally deploy the clamp 44. In particular, the carrier 44c carrying the clamping member 44e is moved downwardly together with the shaft 42 against the spring-loaded activator 44d. The engagement of the sloping surfaces of the activator 44d with the clamping member 44e forces the clamping member 44e to gradually pivot outwardly, thereby increasing the radial span of the clamp 44. That is the axial relative movement between the clamping member 44e and the activator 44d is used to induce the pivotal movement of the clamping member 44e via the wedge shaped configuration of the activator 44d. In this intermediate state, the clamping member 44e is axially aligned with the surface to be clamped 25d but axially spaced therefrom. In other embodiments, the intermediate state is omitted, and the clamp 44 is operable to move directly from the undeployed state to the deployed state, for instance by way of a combined and uninterrupted axial and radial displacement.

Referring now to FIGS. 8A-8B, the system 30 is shown with the clamp 44 in the deployed state, with the clamping member 44e engaging the surface to be clamped 25d, thereby axially retaining the impeller 20 to the clamping device 40. The positioning of the clamping member 44e relative to the shaft 42 mirrors its positioning in the intermediate state (i.e., with the clamping member 44e occupying its maximum radial span). In the deployed state, continued torquing of the fastener 44a axially displaces the shaft 42 together with the radially deployed clamping member 44e in the downward direction, thereby further compressing the spring 44b and causing the clamping member 44e (and in particular the abutting surface 44e2 shown in FIG. 5C) to engage the surface to be clamped 25d. A clamping or retaining force is thus created between the clamping device 40 and the impeller 20 between two spaced-apart axial engagements between the impeller 20 and the clamping device 40 (in particular, at the engagement between the clamping member 44e and the surface to be clamped 25d, and at the engagement and securement between the body 21 of the impeller 20 and the base 41 of the clamping device 40.

The deployment of the clamp 44 can be adapted based on the specific geometry of the component to be secured. For instance, the shapes (e.g., angles) of the activator 44d and clamping member 44e can be selected so that the clamping member 44e pivots at a desired location within the inner cavity 22 to avoid interference with the inner wall 25 as the clamp displaces axially. Additionally or alternatively, the length and positioning of the spring 44b can be selected to vary the deployment of the clamp 44. Other modifications to the geometry of the clamping device 40 are contemplated.

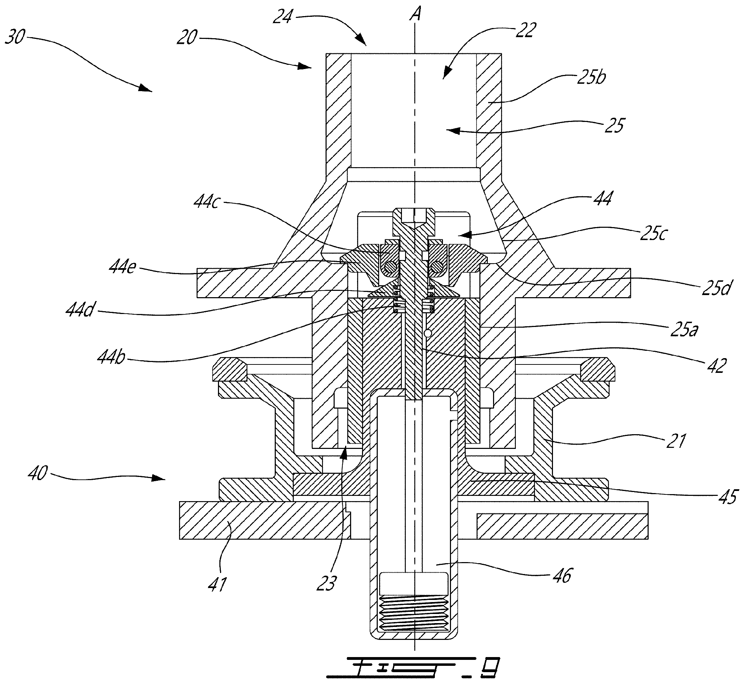

Referring to FIG. 9, another embodiment of a system 30 for use in the manufacturing of an aircraft engine (illustratively for the machining of impeller 20) and a clamping device 40 is shown. Unless otherwise specified, like reference numerals refer to like elements. In this embodiment, the fastener 44a and the corresponding threads on the shaft 42 and bore 43 are omitted. In their place, the shaft 42 includes a linear actuator 46 coupled to the base 41 and axially aligned with the shaft 42. The linear actuator 46 is thus adapted to axially displace the shaft 42 to and from the base 41, such displacement compressing the spring 44b and engaging the clamp 44 to move the clamp 44 between the undeployed, intermediate and deployed states. While FIG. 9 shows the clamp 44 in the deployed state, it is understood that the above descriptions of the clamping device 40 in the undeployed state (FIGS. 6A-6B), intermediate state (FIGS. 7A-7B) and deployed state (FIG. 8A-8B) apply to the clamping device 40 shown in FIG. 9 but for the replacement of the fastener 44a with the linear actuator 46 described herein. In some cases, the linear actuator 46 is a hydraulic actuator or a pneumatic actuator. Other linear actuator 46 types are contemplated. In an embodiment, the linear actuator 46 includes a single action cylinder, with an additional spring provided adjacent to the opening 23 to allow for both clamping and unclamping. In another embodiment, the linear actuator includes a double-action cylinder adapted for both clamping and unclamping. Other mechanisms for deploying the clamp 44, for instance an electrical actuator or a mechanical or manual clamping device such as a cam handle clamp or toggle clamp, are contemplated.

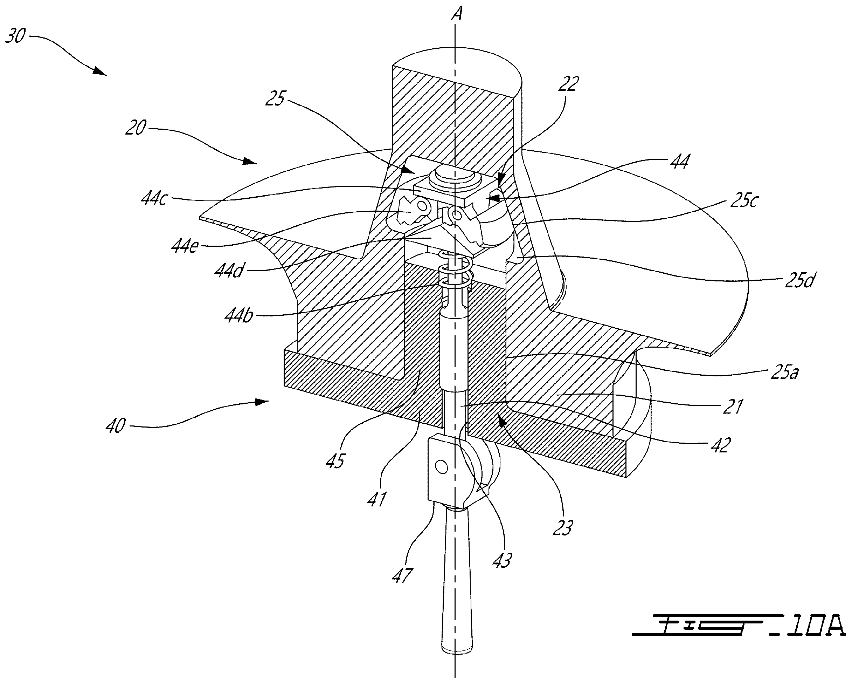

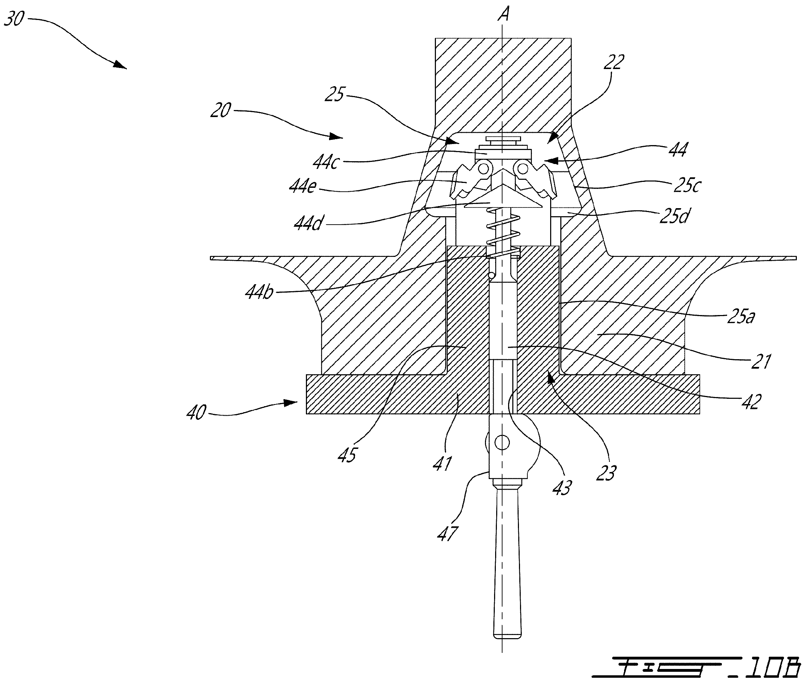

Referring to FIGS. 10A-10B, another embodiment of a system 30 for use in the manufacturing of an aircraft engine (illustratively for the machining of impeller 20) and a clamping device 40 is shown. Unless otherwise specified, like reference numerals refer to like elements. The depicted system 30 of FIGS. 10A-10B is particularly applicable to an engine component such as an impeller 20 that does not include dual sided access to its inner cavity 22. Stated differently, impeller 20 does not include through-hole access to the inner cavity 22, which is only accessible through the opening 23 at its lower end. It is understood, however, that the clamping device 40 shown in FIGS. 10A-10B can also be used in the dual opening impellers 20 discussed above. In the embodiment shown in FIGS. 10A-10B, the clamping device 40 includes a deployment mechanism 47 located underneath the base 41 and adapted to deploy the clamp 44 from the bottom end of the clamping device 40. As such, access from a second opening opposite the opening 23 is not required to deploy the clamp 44. For instance, the deployment mechanism 47 can include an electrical actuator or a mechanical or manual clamping device such as a cam handle clamp or a toggle clamp. Other types of deployment mechanisms 47 are contemplated.

In the embodiments disclosed herein, the inner cavity 22 of the impeller 20 has a circular cross-sectional shape. The surface to be clamped thus extends at least partially about a circumference of the inner cavity 22. Other cross-sectional shapes for the inner cavity 22 are contemplated, for instance, a rectangular cross-sectional shape. In embodiments, the clamping member 44e is shaped to correspond with the cross-sectional shape of the inner cavity, for instance to include rounded edges or straight edges.

In accordance with the present disclosure, there is provided an exemplary method for clamping a component of an aircraft engine 10 (for instance, impeller 20) undergoing a manufacturing process. A clamping device 40 is inserted through an opening 23 of the component in an axial direction (i.e., along axis A), the clamping device 40 including a clamp 44 in an undeployed state in which the clamp 44 is free of contact from an inner wall 25 of the component. Subsequently to inserting the clamping device, the clamp 44 is moved from the undeployed state to a deployed state in which the clamp 44 engages an axially facing surface of the inner wall 25 of the component to axially retain the component to the clamping device 40. In an embodiment, moving the clamp 44 from the undeployed state to the deployed state includes displacing a shaft 42 of the clamping device 40 in the axial direction, the shaft 42 coupled to the clamp 44 to impart motion thereto. In an embodiment, the clamp 44 includes a pivotally-mounted clamping member 44e, and displacing the shaft 42 includes torquing a fastener 44a at a distal end of the shaft 42 to induce axial movement of the shaft 42 relative to a base 41 of the clamping device 40, said axial movement of the shaft 42 biasing the pivotally-mounted clamping member 44e against a spring-loaded activator 44d to move the clamp 44 from the undeployed state to the deployed state. In an embodiment, displacing the shaft 42 includes activating a linear actuator 46 adapted to axially displace the shaft 42. In an embodiment, moving the clamp 44 from the undeployed state to the deployed state includes engaging the clamp 44 against a clamping surface 25d of the component, the clamping surface 25d extending radially outwardly from the opening 23. Other variations of the above-described method are contemplated.

In accordance with the present disclosure, there is provided a system for manufacturing an aircraft engine, and in particular for machining a component of the aircraft engine, the component being a rotating part having varying inner diameters, for instance an impeller. In use, a clamping device of the system is inserted, in an undeployed state, into an inner cavity of the component to avoid interference with the inner wall of the component. The clamping device is then gradually deployed to engage a clamping surface within the component and secure or retain the component to the clamping device so that the machining process(es) can be performed. Advantageously, the clamping device described herein is adapted to secure or retain components having complex inner geometries, ensuring repeatability and minimizing the risk of damage to finished surfaces of the component. In addition, the internal clamping of the component provides unhindered access to the outer surfaces of the component for machining.

It is noted that various connections are set forth between elements in the preceding description and in the drawings. It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities. The term "connected" or "coupled to" may therefore include both direct coupling (in which two elements that are coupled to each other contact each other) and indirect coupling (in which at least one additional element is located between the two elements).

It is further noted that various method or process steps for embodiments of the present disclosure are described in the preceding description and drawings. The description may present the method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various aspects of the present disclosure have been disclosed, it will be apparent to those of ordinary skill in the art that many more embodiments and implementations are possible within the scope of the present disclosure. For example, the present disclosure as described herein includes several aspects and embodiments that include particular features. Although these particular features may be described individually, it is within the scope of the present disclosure that some or all of these features may be combined with any one of the aspects and remain within the scope of the present disclosure. References to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. The use of the indefinite article "a" as used herein with reference to a particular element is intended to encompass "one or more" such elements, and similarly the use of the definite article "the" in reference to a particular element is not intended to exclude the possibility that multiple of such elements may be present.

The embodiments described in this document provide non-limiting examples of possible implementations of the present technology. Upon review of the present disclosure, a person of ordinary skill in the art will recognize that changes may be made to the embodiments described herein without departing from the scope of the present technology. For example, while the herein-described clamping device is discussed in the context of machining a component for an aircraft engine, it is understood that the herein described clamping device can be used in other clamping applications. Yet further modifications could be implemented by a person of ordinary skill in the art in view of the present disclosure, which modifications would be within the scope of the present technology.

## Claims

1. A system for use in the manufacturing of an aircraft engine, the system comprising:
a component of the aircraft engine to be machined, the component to be machined having an opening leading to an inner cavity in an axial direction, the inner cavity having an inner wall with a tapered portion extending axially and a surface to be clamped extending radially outwardly from the opening to the tapered portion; and
a clamping device for clamping the component to be machined, the clamping device including a base, a shaft displaceable relative to the base in the axial direction and inserted through the opening of the component to be machined, and a clamp coupled to the shaft, the clamp movable, based on a position of the shaft relative to the base, between an undeployed state in which the clamp is free of contact with the inner wall of the component to be machined and a deployed state in which the clamp engages the surface to be clamped to axially retain the component to be machined.

2. The system as defined in claim 1, further comprising a carrier and an activator axially movable along the shaft, the carrier axially movable together with the shaft and pivotally carrying the clamp for engagement with the activator to move the clamp between the undeployed state and the deployed state upon axial displacement of the shaft relative to the base.

3. The system as defined in claim 2, wherein the clamp includes one or more wing-shaped clamping members pivotally mounted to the carrier for pivotal movement between the undeployed state and the deployed state.

4. The system as defined in claim 2 or 3, further comprising a spring mounted around the shaft axially between the base and the activator, the spring urging the activator towards the clamp.

5. The system as defined in any of claims 1 to 4, wherein the shaft includes external threading rotatably engageable with internal threading in a bore extending through the base for displacement of the shaft along the axis.

6. The system as defined in any of claims 1 to 5, wherein the clamping device includes a linear actuator disposed in the base and adapted to axially displace the shaft along the axis.

7. The system as defined in claim 6, wherein the linear actuator is a hydraulic actuator or a pneumatic actuator.

8. The system as defined in any of claims 1 to 7, wherein the component to be machined includes an additional opening opposite the opening, the additional opening having a diameter inferior to a diameter of the opening.

9. A method for clamping a component of an aircraft engine undergoing a manufacturing process, comprising:
inserting a clamping device through an opening of the component in an axial direction, the clamping device including a clamp in an undeployed state in which the clamp is free of contact from an inner wall of the component; and
subsequently to the inserting the clamping device through the opening of the component, moving the clamp from the undeployed state to a deployed state in which the clamp engages an axially facing surface of the inner wall of the component to axially retain the component to the clamping device.

10. The method as defined in claim 9, wherein moving the clamp from the undeployed state to the deployed state includes displacing a shaft of the clamping device in the axial direction, the shaft coupled to the clamp to impart motion thereto.

11. The method as defined in claim 10, wherein the clamp includes a pivotally-mounted clamping member, and wherein displacing the shaft includes torquing a fastener at a distal end of the shaft to induce axial movement of the shaft relative to a base of the clamping device, said axial movement of the shaft biasing the pivotally-mounted clamping member against a spring-loaded activator to move the clamp from the undeployed state to the deployed state.

12. The method as defined in claim 10, wherein displacing the shaft includes activating a linear actuator adapted to axially displace the shaft.

13. The method as defined in any of claims 9 to 12, wherein moving the clamp from the undeployed state to the deployed state includes engaging the clamp against a clamping surface of the component, the clamping surface extending radially outwardly from the opening.
